# EUROPEAN PATENT APPLICATION

(11) **EP 4 578 293 A1**
(43) Date of publication of application: **02.07.2025**
(21) Application number: 23857418.0
(22) Date of filing: 24.08.2023
(51) Int. Cl.: A23G 3/34, A23G 3/52, A23L 29/20, A23L 29/30

(54) **SOFT CANDY AND SOFT CANDY PRODUCTION METHOD**

(30) Priority: 24.08.2022 JP 2022133699
(71) Applicant: Morinaga & Co., Ltd., Tokyo 105-8309 (JP)
(72) Inventor: MATSUI Motoki, Yokohama-shi, Kanagawa 230-8504 (JP); YAMAGUCHI Takahiro, Yokohama-shi, Kanagawa 230-8504 (JP); YUZAKI Midori, Yokohama-shi, Kanagawa 230-8504 (JP); ASANO Masaki, Yokohama-shi, Kanagawa 230-8504 (JP)
(74) Representative: Mewburn Ellis LLP
(86) International application number: PCT/JP2023/030521
(87) International publication number: WO 2024/043310

(57) **Abstract**

A soft candy having excellent shape retention and detachability includes a base composition containing a sugar, a glucide that inhibits crystallization of the sugar, and a thickener, in which the base composition has a specific gravity of 1.00 to 1.25 g/cm³; and a ratio of the sugar to a total mass of the sugar and the glucide that inhibits crystallization of the sugar in the base composition is from 50 to 75 mass%, or among bubbles present in a cross section of a soft candy produced by shaping the base composition, a total area of bubbles having an area of 0.05 mm² or greater is 80% or less relative to a total area of the bubbles. A soft candy has excellent shape retention and detachability.

## Description

### TECHNICAL FIELD

The present invention relates to a soft candy and a method for producing a soft candy.

This application claims priority from Japanese patent application no. 2022-133699, filed on August 24, 2022, the content of which is incorporated herein by reference.

### BACKGROUND ART

Soft candies are popular among a wide range of age groups for their pleasant chewy texture that can be enjoyed for a long time.

Patent Document 1 discloses a soft candy characterized by containing at least a saccharide, a vegetable oil, an emulsifier, and fine sucrose crystals having a crystal size of less than 30 µm, and having an initial chewing ease of 5000 to 23000 (g·s).

This soft candy has excellent characteristics that it has superior softness when initially chewed and is resistant to adhering to the teeth.

### Citation List

### Patent Documents

Patent Document 1: International Patent Publication No. 2002/009530

### SUMMARY OF THE INVENTION

### Technical Problem

Pieces of the soft candy disclosed in Patent Document 1 easily stick to each other and thus are usually sold in an individually packaged form.

In recent years, however, for the realization of a sustainable society, simplified packaging, that is, elimination of individual packaging, has been demanded by consumers.

Coating the surface of a soft candy with sugarcoat or film is a common practice for eliminating individual packaging for soft candy, but this results in a problem of different texture between the coating layer and the soft candy part.

An object of the present invention is to provide a soft candy having excellent shape retention and detachability.

### Solution to Problem

[1] A soft candy comprising a base composition comprising a sugar, a glucide that inhibits crystallization of the sugar, and a thickener,
   wherein the base composition has a specific gravity of 1.00 to 1.25 g/cm³, and
   a ratio of the sugar to a total mass of the sugar and the glucide that inhibits crystallization of the sugar in the base composition is from 50 to 75 mass%.
[2] The soft candy according to [1], wherein the base composition further comprises water in an amount of 6.5 to 9.0 mass% of a total mass of the base composition.
[3] The soft candy according to [1] or [2], wherein the base composition further comprises calcium in an amount of 0.04 to 2.0 mass% of a total mass of the base composition.
[4] The soft candy according to any of [1] to [3], wherein the sugar comprises fine sugar crystals having an average crystal size of less than 30 µm.
[5] The soft candy according to any of [1] to [4], wherein the thickener is at least one selected from the group consisting of gelatin, starch, modified starch, pullulan, gum arabic, pectin, guar gum, xanthan gum, tamarind gum, carrageenan, deacylated gellan gum, native gellan gum, psyllium seed gum, and carboxymethyl cellulose.
[6] The soft candy according to any of [1] to [5], wherein the base composition further comprises a vegetable oil, and
   the vegetable oil is at least one selected from the group consisting of palm oil, soybean oil, rapeseed oil, sunflower oil, palm kernel oil, coconut oil, cottonseed oil, peanut oil, olive oil, palm butter, corn oil, sesame oil, castor oil, and linseed oil.
[7] The soft candy according to [6], wherein the base composition further comprises an emulsifier, and
   the emulsifier is at least one selected from the group consisting of a sucrose fatty acid ester, a sorbitan fatty acid ester, lecithin, and a glycerin fatty acid ester.
[8] The soft candy according to any of [1] to [7], wherein, among bubbles present in a cross section of a soft candy produced by shaping the base composition, a total area of bubbles having an area of 0.05 mm² or greater is 80% or less relative to a total area of the bubbles present in the cross section.
[9] The soft candy according to any of [1] to [8], wherein a plurality of the soft candies are enclosed as they are in one packaging container.
[10] The soft candy according to any of [1] to [9], wherein the soft candy is not individually packaged.
[11] A soft candy comprising a base composition comprising a sugar, a glucide that inhibits crystallization of the sugar, and a thickener,
   wherein the base composition has a specific gravity of 1.00 to 1.25 g/cm³, and
   among bubbles present in a cross section of a soft candy produced by shaping the base composition, a total area of bubbles having an area of 0.05 mm² or greater is 80% or less relative to a total area of the bubbles present in the cross section.
[12] The soft candy according to [11], wherein the base composition further comprises water in an amount of 6.5 to 9.0 mass% of a total mass of the base composition.
[13] The soft candy according to [11] or [12], wherein the base composition further comprises calcium in an amount of 0.04 to 2.0 mass% of a total mass of the base composition.
[14] The soft candy according to any of [11] to [13], wherein the sugar comprises fine sugar crystals having an average crystal size of less than 30 µm.
[15] The soft candy according to any of [11] to [14], wherein the thickener is at least one selected from the group consisting of gelatin, starch, modified starch, pullulan, gum arabic, pectin, guar gum, xanthan gum, tamarind gum, carrageenan, deacylated gellan gum, native gellan gum, psyllium seed gum, and carboxymethyl cellulose.
[16] The soft candy according to any of [11] to [15], wherein the base composition further comprises a vegetable oil, and
   the vegetable oil is at least one selected from the group consisting of palm oil, soybean oil, rapeseed oil, sunflower oil, palm kernel oil, coconut oil, cottonseed oil, peanut oil, olive oil, palm butter, corn oil, sesame oil, castor oil, and linseed oil.
[17] The soft candy according to [16], wherein the base composition further comprises an emulsifier, and
   the emulsifier is at least one selected from the group consisting of a sucrose fatty acid ester, a sorbitan fatty acid ester, lecithin, and a glycerin fatty acid ester.
[18] The soft candy according to any of [11] to [17], wherein a ratio of the sugar to a total mass of the sugar and the glucide that inhibits crystallization of the sugar in the base composition is from 50 to 75 mass%.
[19] The soft candy according to any of [11] to [18], wherein a plurality of the soft candies are enclosed as they are in one packaging container.
[20] The soft candy according to any of [11] to [19], wherein the soft candy is not individually packaged.
[21] A method for producing a soft candy, the method comprising the steps of:
   a soft candy base stock solution preparing step of preparing a soft candy base stock solution by mixing a sugar, a glucide that inhibits crystallization of the sugar, and water;
   a soft candy base preparing step of boiling down the soft candy base stock solution to form a soft candy base;
   a base composition preparing step of obtaining a base composition by adding a foaming agent and an acidulant to the soft candy base, and reacting the foaming agent and the acidulant to generate bubbles; and
   a shaping step of forming a soft candy by shaping the base composition.
[22] The method for producing a soft candy according to [21], wherein the foaming agent is at least one selected from the group consisting of a carbonate of calcium and a hydrogencarbonate of calcium.
[23] The method for producing a soft candy according to [21] or [22], the method further comprising, after the shaping step, enclosing a plurality of the shaped soft candies as they are in one packaging container.
[24] The method for producing a soft candy according to any of [21] to [23], wherein a thickener is mixed in the soft candy base stock solution preparing step and/or the base composition preparing step, and
   the thickener is at least one selected from the group consisting of gelatin, starch, modified starch, pullulan, gum arabic, pectin, guar gum, xanthan gum, tamarind gum, carrageenan, deacylated gellan gum, native gellan gum, psyllium seed gum, and carboxymethyl cellulose.
[25] The method for producing a soft candy according to any of [21] to [24], wherein a vegetable oil is further mixed in the soft candy base stock solution preparing step, and the vegetable oil is at least one selected from the group consisting of palm oil, soybean oil, rapeseed oil, sunflower oil, palm kernel oil, coconut oil, cottonseed oil, peanut oil, olive oil, palm butter, corn oil, sesame oil, castor oil, and linseed oil.
[26] The method for producing a soft candy according to [25], wherein an emulsifier is further mixed in the soft candy base stock solution preparing step, and the emulsifier is at least one selected from the group consisting of a sucrose fatty acid ester, a sorbitan fatty acid ester, lecithin, and a glycerin fatty acid ester.

### Advantageous Effects of Invention

According to the present invention, there is provided a soft candy having excellent shape retention and detachability.

### BRIEF DESCRIPTION OF DRAWINGS

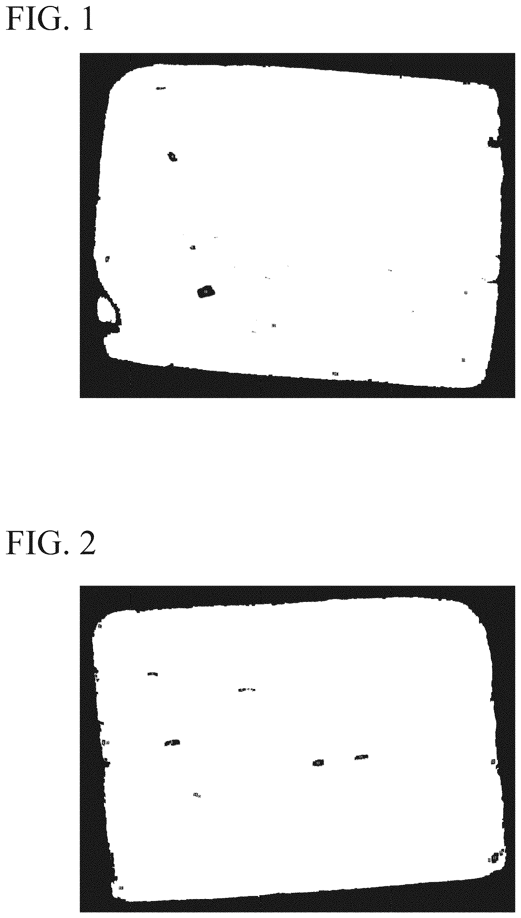

FIG. 1 is a photograph showing a state of bubbles in a cross section of a soft candy of sample #1 of Example 10.
FIG. 2 is a photograph showing a state of bubbles in a cross section of a soft candy of sample #2 of Example 10.

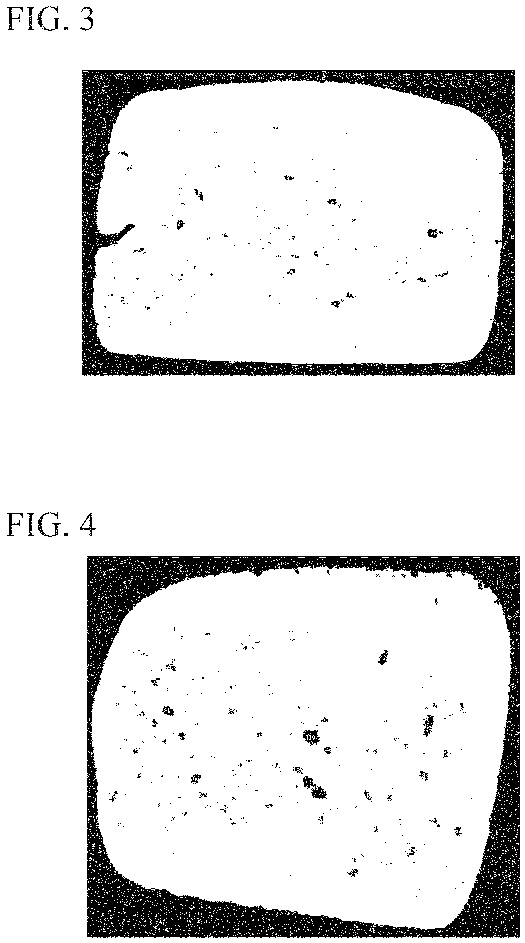

FIG. 3 is a photograph showing a state of bubbles in a cross section of a soft candy of sample #1 of Example 4.
FIG. 4 is a photograph showing a state of bubbles in a cross section of a soft candy of sample #2 of Example 4.

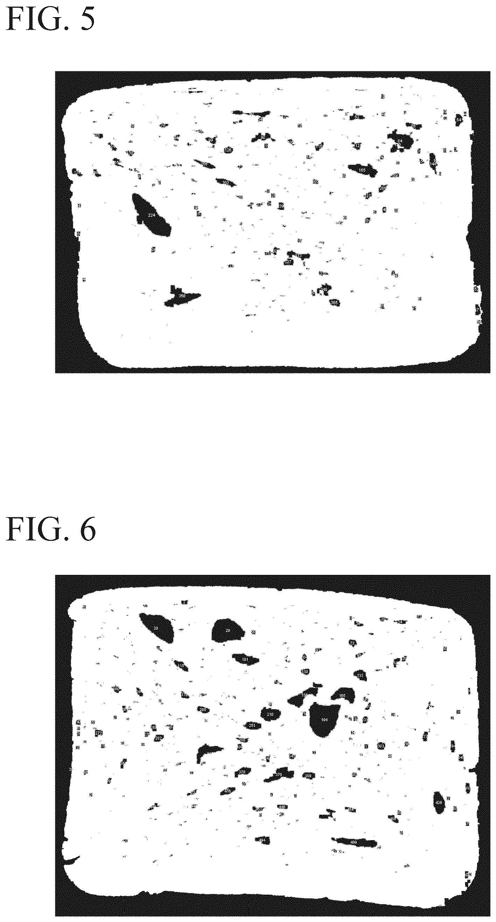

FIG. 5 is a photograph showing a state of bubbles in a cross section of a soft candy of sample #1 of Example 2.
FIG. 6 is a photograph showing a state of bubbles in a cross section of a soft candy of sample #2 of Example 2.

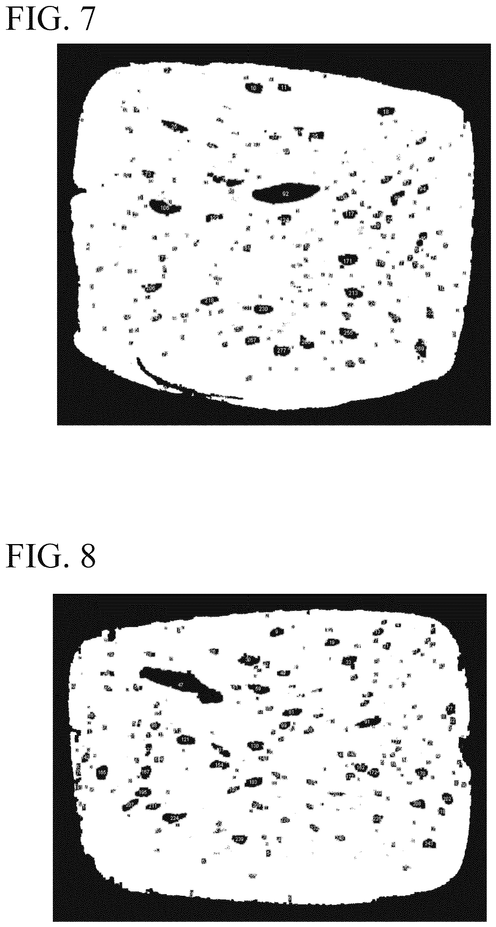

FIG. 7 is a photograph showing a state of bubbles in a cross section of a soft candy of sample #1 of Example 1.
FIG. 8 is a photograph showing a state of bubbles in a cross section of a soft candy of sample #2 of Example 1.

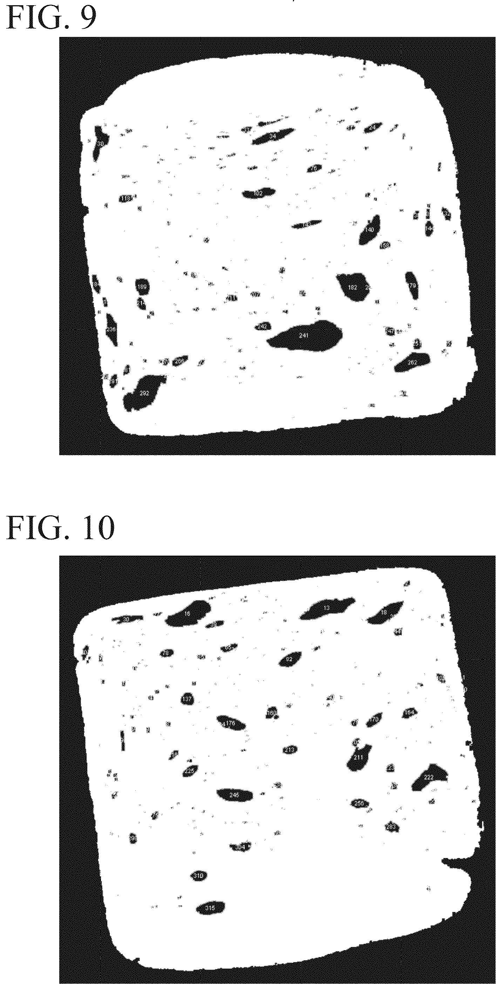

FIG. 9 is a photograph showing a state of bubbles in a cross section of a soft candy of sample #1 of Comparative Example 3.
FIG. 10 is a photograph showing a state of bubbles in a cross section of a soft candy of sample #2 of Comparative Example 3.
FIG. 11 is a photograph showing a state in which the soft candies were placed in a transparent plastic container for detachability evaluation.

### DESCRIPTION OF EMBODIMENTS

Hereinafter, embodiments of the present invention will be described in detail, but the present invention is not limited only to the embodiments described below, and various modifications can be made without departing from the gist of the present invention.

In the present invention, when a numerical range is expressed using "from ... to ...", the numerical range includes values on both sides of "to".

In the present invention, "shape retention" refers to characteristics of a piece of a soft candy retaining its shape.

In the present invention, "detachability" refers to characteristics of a soft candy where pieces of the soft candies can be easily detached from each other even when the pieces of the soft candies have been kept in a state of being in close contact with each other.

In the present invention, "texture" refers to initial chewing hardness and elasticity when a soft candy is consumed.

In the present invention, "chewability" refers to chewing time when a soft candy is consumed.

### [Soft candy]

### <First embodiment>

A soft candy of a first embodiment of the present invention is a soft candy including a base composition containing a sugar, a glucide that inhibits crystallization of the sugar, and a thickener, in which the base composition has a specific gravity of 1.00 to 1.25 g/cm³, and a ratio of the sugar to a total mass of the sugar and the glucide that inhibits crystallization of the sugar in the base composition is from 50 to 75 mass%.

The ratio of the sugar to the total mass of the sugar and the glucide that inhibits crystallization of the sugar in the base composition (also referred to as a "sugar ratio") is not limited to a particular range as long as it is from 50 to 75 mass%, but is preferably from 52 to 75 mass% and more preferably from 52 to 65 mass%. The base composition having a sugar ratio in the range of 50 to 75 mass% can improve the detachability of the soft candy of the present embodiment to a required level or higher. The sugar ratio is calculated based on the total amount of sucrose in the base. Thus, when powdered sugar, fondant, frappe, or the like is used as an auxiliary raw material other than the sugar, the amount of sucrose contained in these auxiliary raw materials is included to calculate the sugar ratio.

### (Components of base composition)

The sugar is a raw material containing sucrose as a main component and is not limited to a particular material. Examples include those produced from a raw material, such as sugarcane, sugar beet (beet), sugar maple, pahnyra palm (sugar palm), or sweet sorghum (sugar sorghum).

Either an unrefined sugar or a centrifugal sugar can be used as the sugar, but a centrifugal sugar produced by separating molasses is preferred, and a refined sugar produced by further refining a centrifugal sugar is more preferred.

Examples of the refined sugar include granulated crystal sugars, such as granulated sugar, white granulated sugar, and medium granulated sugar; soft sugars, such as superior white sugar and soft brown sugar; liquid sugars; and processed sugars produced using a granulated crystal sugar as a raw material, such as sugar cubes, sugar crystals, powdered sugars, and granular-form sugars.

One type of the sugars can be used individually, or two or more types can be used in combination.

The sugar preferably includes fine sugar crystals having an average crystal size of less than 30 µm in the base composition and more preferably fine sugar crystals having a crystal size of 5 to 20 µm.

A content of the sugar in the base composition is not limited to a particular range but is preferably from 34 to 66 mass% on a solid basis relative to the total mass of the base composition.

The glucide that inhibits crystallization of the sugar is not limited to a particular material, but examples usually include lactulose, milk sugar (lactose), malt sugar (maltose), trehalose, and cellobiose (disaccharides other than sucrose); nigerotriose, maltotriose, melezitose, maltotriulose, raffinose, panose, and kestose (trisaccharides); nystose, nigerotetraose, and stachyose (tetraoses); erythritol, glycerin, lactitol, maltitol, mannitol, sorbitol, and xylitol (sugar alcohols); soybean oligosaccharides, fructooligosaccharides, lactosucrose, xylooligosaccharides, and galactooligosaccharides (oligosaccharides); and starch, glycogen, dextrin, dextran, agarose, and pectin (polysaccharides). The base composition contains at least one type selected from the group consisting of these glucides inhibiting crystallization of the sugar.

In the soft candy of the present embodiment, a starch syrup is preferably used as the glucide that inhibits crystallization of the sugar. The starch syrup is usually a mixture of glucose, malt sugar, dextrin, and the like produced by saccharifying starch with an acid or saccharification enzyme.

The starch syrup that can be used includes an acid-saccharified starch syrup and an enzyme-saccharified starch syrup.

The dextrin equivalent (DE) of the starch syrup is not limited to a particular range.

A content of the glucide that inhibits crystallization of the sugar in the base composition is not limited to a particular range but is preferably from 17 to 44 mass% on a solid basis relative to the total mass of the base composition.

A mass ratio of the sugar to the glucide that inhibits crystallization of the sugar (sugar:glucide that inhibits crystallization of sugar) on a solid basis in the base composition is preferably from 50:50 to 75:25, more preferably from 51:49 to 70:30, and even more preferably from 52:48 to 63:37.

The thickener is not limited to a particular type and examples thereof include food additives, such as gelatin, starch, modified starch, pullulan, gum arabic, pectin, guar gum, xanthan gum, tamarind gum, carrageenan, deacylated gellan gum, native gellan gum, psyllium seed gum, and carboxymethyl cellulose.

One type of the thickeners can be used individually, or two or more types can be used in combination.

A content of the thickener in the base composition is not limited to a particular range but is preferably from 0.5 to 15.0 mass%, more preferably from 1.0 to 12.5 mass%, and even more preferably from 1.5 to 10.0 mass% relative to the total mass of the base composition.

The base composition may further contain a vegetable oil.

The vegetable oil is any oil and/or fat produced using a plant as a raw material and is not limited to a particular type, and examples thereof include edible vegetable oils, such as palm oil, soybean oil, rapeseed oil, sunflower oil, palm kernel oil, coconut oil, cottonseed oil, peanut oil, olive oil, palm butter, corn oil, sesame oil, castor oil, and linseed oil.

One type of the vegetable oils can be used individually, or two or more types can be used in combination.

The vegetable oil is not limited to a type with particular properties, such as a particular melting point. For example, rapeseed oil or its hardened oil can be used.

A content of the vegetable oil in the base composition is not limited to a particular range but is preferably from 3 to 20 mass%, more preferably from 4 to 18 mass%, and even more preferably from 6 to 15 mass% relative to the total mass of the base composition.

The base composition may further contain an emulsifier in addition to the vegetable oil.

The emulsifier is any material that can emulsify the vegetable oil and is not limited to a particular type, and examples thereof include an edible emulsifier, such as a sucrose fatty acid ester, a sorbitan fatty acid ester, lecithin, and a glycerin fatty acid ester.

One type of the emulsifiers can be used individually, or two or more types can be used in combination.

The emulsifier is preferably at least one selected from the group consisting of a sucrose fatty acid ester, a sorbitan fatty acid ester, lecithin, and a glycerin fatty acid ester, more preferably at least one selected from the group consisting of a sucrose fatty acid ester and a sorbitan fatty acid ester, and even more preferably, a sucrose fatty acid ester and a sorbitan fatty acid ester are used in combination.

In addition, the emulsifier may be either a hydrophilic emulsifier or a lipophilic emulsifier, but preferably, a hydrophilic emulsifier and a lipophilic emulsifier are used in combination. Combined use of a hydrophilic emulsifier and a lipophilic emulsifier makes it possible to provide a soft candy having softer initial chewing and being less sticky to the teeth.

A content of the emulsifier in the base composition is not limited to a particular range but is preferably from 0.1 to 6.0 mass%, more preferably from 0.1 to 4.5 mass%, and even more preferably from 0.1 to 3.0 mass% relative to the total mass of the base composition.

The base composition may further contain water. A water content can be measured using a reduced pressure heating drying method.

The water content in the base composition is preferably from 6.5 to 9.0 mass%, more preferably from 6.8 to 8.8 mass%, and even more preferably from 7.0 to 8.5 mass% relative to the total mass of the base composition.

### Specific gravity of base composition

The specific gravity of the base composition is from 1.00 to 1.25 g/cm³, preferably from 1.05 to 1.25 g/cm³, more preferably from 1.05 to 1.25 g/cm³, and even more preferably from 1.10 to 1.25 g/cm³.

The base composition having a specific gravity of 1.00 to 1.25 g/cm³ improves the detachability of the soft candy.

### (Calcium content of base composition)

A calcium content of a base composition according to a first embodiment of the present invention is not limited to a particular range but is preferably from 0.04 to 2.0 mass%, more preferably from 0.04 to 1.0 mass%, and even more preferably from 0.04 to 0.5 mass% of the total mass of the base composition.

### (State of bubbles in cross section of shaped soft candy)

Bubbles may be present in a cross section of the soft candy produced by shaping the base composition. Among the bubbles, a total area of bubbles having an area of 0.05 mm² or greater is preferably 80% or less, more preferably 75% or less, and even more preferably 71% or less relative to a total area of the bubbles. In other words, voids may be present in a cross section of the soft candy produced by shaping the base composition, and a total area of voids having an area of 0.05 mm² or greater in the cross section is preferably 80% or less, more preferably 75% or less, and even more preferably 71% or less relative to a total area of the voids.

### (Packaging form of soft candy)

For the soft candy of the present embodiment, preferably, a plurality of the soft candies are enclosed as they are in one packaging container. In other words, the soft candy of the present embodiment is preferably not individually packaged. The packaging container is not limited to a particular type, but examples include storage containers for candies that have been known in the art, such as a bag-like container, a cylindrical container, and a can-like container.

### (Modified examples)

Modified examples of the soft candy of the present embodiment include a soft candy in which a sticky base substance or material (e.g., a solid such as dried fruit, or jelly) is wrapped inside, and a soft candy in which a powder is adhered to the surface of the soft candy body including a base composition. Modified examples of the shape include a sphere, an ellipse, a cube, and a shape formed by die cutting with any die. The surface of the soft candy can be sprinkled with powder. Modified examples of the soft candy of the present embodiment are not limited to these.

### <Second embodiment>

A soft candy of a second embodiment of the present invention is a soft candy including a base composition containing a sugar, a glucide that inhibits crystallization of the sugar, and a thickener, in which the base composition has a specific gravity of 1.00 to 1.25 g/cm³, and among bubbles present in a cross section of a soft candy produced by shaping the base composition, a total area of bubbles having an area of 0.05 mm² or greater is 80% or less relative to a total area of the bubbles.

The total area of bubbles having an area of 0.05 mm² or greater among bubbles present in a cross section of a soft candy produced by shaping the base composition is not particularly limited as long as it is 80% or less relative to a total area of the bubbles, but is preferably 75% or less and more preferably 71% or less relative to a total area of the bubbles. In other words, a total area of voids having an area of 0.05 mm² or greater among voids present in a cross section of a soft candy produced by shaping the base composition is not particularly limited as long as it is 80% or less relative to a total area of the voids, but is preferably 75% or less and more preferably 71% or less relative to a total area of the voids.

### (Components of base composition)

The components of the base composition according to the second embodiment of the present invention are similar to the components of the base composition according to the first embodiment of the present invention.

### (Specific gravity of base composition)

The specific gravity of the base composition according to the second embodiment of the present invention is similar to the specific gravity of the base composition according to the first embodiment.

### (Calcium content of the base composition)

The calcium content of the base composition according to the second embodiment of the present invention is similar to the calcium content of the base composition according to the first embodiment.

### (Sugar ratio)

The ratio of the sugar to the total mass of the sugar and the glucide that inhibits crystallization of the sugar in the base composition (also referred to as a "sugar ratio") is not limited to a particular range but is preferably from 50 to 75 mass%, more preferably from 52 to 75 mass%, and even more preferably from 52 to 65 mass%. The base composition having a sugar ratio in the range of 50 to 75 mass% can further improve the detachability of the soft candy of the present embodiment.

### (Initial chewing ease of soft candy)

The initial chewing ease of the soft candy according to the second embodiment is similar to the initial chewing ease of the soft candy according to the first embodiment.

### (Packaging form of soft candy)

The packaging form of the soft candy according to the second embodiment is similar to the packaging form of the soft candy according to the first embodiment.

### (Modified examples)

Modified examples of the soft candy of the present embodiment include a soft candy in which a sticky base substance or material (e.g., a solid such as dried fruit, or jelly) is wrapped inside, and a soft candy in which a powder is adhered to the surface of the soft candy body made from a base composition. Modified examples of the shape include a sphere, an ellipse, a cube, and a shape formed by die cutting with any die. The surface of the soft candy can be sprinkled with powder. Modified examples of the soft candy of the present embodiment are not limited to these.

### [Method for producing soft candy]

A method for producing a soft candy of the present invention comprises steps (1) to (4) below:
(1) a soft candy base stock solution preparing step of preparing a soft candy base stock solution by mixing a sugar, a glucide that inhibits crystallization of the sugar, and water;
(2) a soft candy base preparing step of boiling down the soft candy base stock solution to form a soft candy base;
(3) a base composition preparing step of obtaining a base composition by adding a foaming agent and an acidulant to the soft candy base, and reacting the foaming agent and the acidulant to generate bubbles; and
(4) a shaping step of forming a soft candy by shaping the base composition.

The sugar, the glucide that inhibits crystallization of the sugar, and the water are similar to those contained in the soft candy of the present invention described above.

The foaming agent is not limited to a particular type but is preferably at least one selected from the group consisting of a carbonate and a hydrogencarbonate. The carbonate is preferably a carbonate of a monovalent or divalent metal ion and specific examples thereof include sodium carbonate, potassium carbonate, calcium carbonate, and magnesium carbonate. Among them, calcium carbonate is particularly preferred. The hydrogencarbonate is preferably a hydrogencarbonate of a monovalent or divalent metal ion and specifically exemplified by sodium hydrogencarbonate, potassium hydrogencarbonate, calcium hydrogencarbonate, and magnesium hydrogencarbonate. Among these, calcium hydrogencarbonate is particularly preferred. One type of the foaming agents can be used individually, or two or more types can be used in combination.

When a carbonate of calcium or a hydrogencarbonate of calcium is used as the foaming agent, it is preferably blended in an amount of 0.1 to 2 mass% on a calcium basis of the total mass of the base composition.

The acidulant is not limited to a particular type but preferably contains at least one selected from the group consisting of a carboxylic acid and a salt of a carboxylic acid. The carboxylic acid is preferably at least one selected from the group consisting of citric acid, malic acid, fumaric acid, lactic acid, acetic acid, and tartaric acid. In addition, examples that can be used as the acidulant also include powders or granules of a brewed vinegar, plum vinegar, fruit vinegar, fruit juice, or the like containing the carboxylic acid. One type of the acidulants can be used individually, or two or more types can be used in combination.

The method preferably further comprises step (5) below after the shaping step:
(5) enclosing a plurality of the shaped soft candies as they are in one packaging container.

### Examples

Hereinafter, the present invention will be described more specifically by examples. However, the present invention is not limited to the examples described below.

### [Production of soft candies]

From the formulations shown in Tables 1 and 2, soft candies of Examples 1 to 17 and Comparative Examples 1 and 2 were produced according to the following procedure.

### (1) Preparation of soft candy base stock solution

A sugar, a starch syrup, water, gum arabic, pullulan, and a vegetable oil were mixed in a super mixer and the mixture was heated to 80°C under stirring, and a soft candy base stock solution was obtained.

### (2) Preparation of soft candy base

The soft candy base stock solution obtained in (1) was boiled down until the water boils away, then cooled to 70°C, and a soft candy base was obtained.

### (3) Preparation of base composition

The remaining raw materials were added to the soft candy base obtained in (2), and the soft candy base and the remaining raw materials were kneaded. And thus a base composition was obtained. The sugar ratio was adjusted by adjusting the amount of sugar contained in the soft candy base and the amounts of fondant and frappe as the auxiliary raw materials.

The specific gravity was adjusted by adjusting the amount of calcium carbonate added and heating the resulting base composition at 50°C. In addition, in Comparative Example 2, calcium carbonate was not added, and a frappe obtained using portions of the sugar, starch syrup, and thickeners was added at the time of kneading using a kneader, and a base composition was obtained.

The base composition obtained in (3) was stretched into a rod shape and then cut into rectangular parallelepipeds each weighing about 2.5 g with a side length of 10 mm to 18 mm, and pieces of soft candy were produced.

Tables 1 and 2 show formulations for providing 100 parts by mass of the [formulated] product.

**[Table 1]**

| | Examples | | | | | | | | | |
|---|---|---|---|---|---|---|---|---|---|---|
| | 1 | 2 | 3 | 4 | 5 | 6 | 7 | 8 | 9 | 10 |
| Sugar | 39.72 | 39.90 | 39.78 | 39.84 | 39.65 | 39.65 | 39.71 | 39.84 | 39.90 | 40.02 |
| Starch syrup | 43.12 | 43.32 | 43.19 | 43.25 | 43.04 | 43.04 | 43.11 | 43.25 | 43.32 | 43.45 |
| Vegetable oil | 8.60 | 8.64 | 8.61 | 8.62 | 8.58 | 8.58 | 8.60 | 8.62 | 8.64 | 8.66 |
| Emulsifier | 1.45 | 1.00 | 1.00 | 1.00 | 1.00 | 1.00 | 1.00 | 1.00 | 1.00 | 1.01 |
| Fondant | 7.01 | 7.04 | 7.02 | 7.03 | 7.00 | 7.00 | 7.01 | 7.03 | 7.04 | 7.06 |
| Gum arabic | 0.25 | 0.25 | 0.25 | 0.25 | 0.25 | 0.25 | 0.25 | 0.25 | 0.25 | 0.25 |
| Modified starch | 0.25 | 0.25 | 0.25 | 0.25 | 0.25 | 0.25 | 0.25 | 0.25 | 0.25 | 0.25 |
| Pullulan | 0.25 | 0.25 | 0.25 | 0.25 | 0.24 | 0.24 | 0.25 | 0.25 | 0.25 | 0.25 |
| Gelatin | 1.49 | 1.49 | 1.49 | 1.49 | 1.48 | 1.48 | 1.49 | 1.49 | 1.49 | 1.50 |
| Acidulant | 1.33 | 1.34 | 1.33 | 1.33 | 1.33 | 1.33 | 1.33 | 1.33 | 1.34 | 1.34 |
| Calcium carbonate | 0.30 | 0.30 | 0.60 | 0.45 | 0.90 | 0.90 | 0.75 | 0.45 | 0.30 | 0.00 |
| Flavor | 0.44 | 0.45 | 0.44 | 0.45 | 0.44 | 0.44 | 0.44 | 0.45 | 0.45 | 0.45 |

| | | | | | | | | | | |
|---|---|---|---|---|---|---|---|---|---|---|
| Unit: mass% | | | | | | | | | | |

**[Table 2]**

| | Examples | | | | | | | Comparative Examples | |
|---|---|---|---|---|---|---|---|---|---|
| | 11 | 12 | 13 | 14 | 15 | 16 | 17 | 1 | 2 |
| Sugar | 37.43 | 37.03 | 40.77 | 42.20 | 41.98 | 39.90 | 46.31 | 40.07 | 39.73 |
| Starch syrup | 48.93 | 48.40 | 43.10 | 44.61 | 44.37 | 43.32 | 37.64 | 48.23 | 43.14 |
| Vegetable oil | 8.59 | 8.50 | 8.47 | 8.77 | 8.72 | 8.64 | 8.64 | 6.75 | 8.60 |
| Emulsifier | 1.00 | 0.99 | 0.98 | 1.02 | 1.01 | 1.00 | 1.00 | 0.23 | 1.00 |
| Fondant | 4.67 | 4.62 | 4.60 | 4.77 | 4.74 | 7.04 | 4.70 | 7.63 | 7.01 |
| Gum arabic | 0.25 | 0.25 | 0.25 | 0.25 | 0.25 | 0.25 | 0.25 | 0.00 | 0.25 |
| Modified starch | 1.50 | 1.48 | 1.48 | 0.25 | 0.25 | 0.25 | 0.25 | 0.00 | 0.25 |
| Pullulan | 0.25 | 0.24 | 0.24 | 0.25 | 0.25 | 0.25 | 0.25 | 0.00 | 0.25 |
| Gelatin | 1.49 | 1.47 | 1.46 | 1.52 | 1.51 | 1.49 | 1.49 | 1.46 | 1.49 |
| Acidulant | 1.33 | 1.31 | 1.31 | 1.36 | 1.35 | 1.34 | 1.34 | 0.90 | 1.33 |
| Calcium carbonate | 0.30 | 0.30 | 0.30 | 0.30 | 0.31 | 0.30 | 0.31 | 0.00 | 0.00 |
| Flavor | 0.44 | 0.44 | 0.44 | 0.45 | 0.45 | 0.45 | 0.45 | 0.31 | 0.44 |

| | | | | | | | | | |
|---|---|---|---|---|---|---|---|---|---|
| Unit: mass% | | | | | | | | | |

### [Evaluation of soft candies]

The sugar ratio, the water content (actual measured water content), and the specific gravity were calculated or measured for each of the soft candies of Examples 1 to 17 and Comparative Example 1, and the shape retention, detachability, initial chewing hardness, elasticity, and chewability were evaluated according to the following procedures.

The results are shown in Table 3 (Examples 1 to 10 and Comparative Example 1) and Table 4 (Examples 11 to 17).

### <Shape retention>

### Test method:

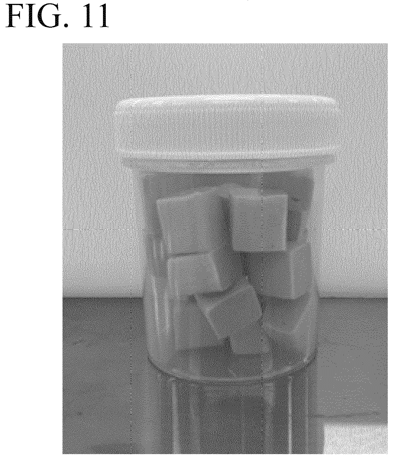

In a 120-mL transparent plastic container, from 70 to 80 g of the soft candy (from about 28 to 32 pieces) was placed, and the container was kept at 37°C for 16 hours (FIG. 11).

Evaluation method of results: The state of the pieces of the soft candy in the container was visually observed.

### Evaluation:

A - no deformation was visually observed
D - deformation was visually observed

### <Detachability>

### Test method:

In a 120-mL transparent plastic container, from 70 to 80 g of the soft candy (from about 28 to 32 pieces) was placed, and the container was kept at 37°C for 16 hours. Thereafter, the container was kept at a room temperature of 20°C for 1 hour or longer and then subjected to repeated beatings, 10 times, against a hard desk from a height of 30 cm at a rate of 120 beats per minute (BPM). Evaluation method of results: The container was opened, the pieces of the soft candy in the container were taken out onto a desk by tilting the container, and the number of detached pieces was counted.

### Evaluation:

A - a ratio of the number of detached pieces to the total number of pieces is 80% or more
B - a ratio of the number of detached pieces to the total number of pieces is 30% or more and less than 80%
D - a ratio of the number of detached pieces to the total number of pieces is less than 30%

### <Initial chewing hardness, elasticity, and chewability>

### Test methods:

Three expert panelists consumed one piece of the soft candy over 40 to 60 seconds in a room controlled at 20°C to evaluate the texture.

### Evaluation method of results:

For the texture, the panelists chewed a piece of the soft candy once per second, evaluated the initial chewing hardness for first to fifth chews; and evaluated the elasticity for sixth to fifteenth chews and evaluating chewability.

For the initial chewing hardness and the elasticity, the sensory evaluation score was set to 4 for Example 5, which was closest to the soft candy known in the art among the Examples. A higher value indicated higher hardness, and a higher value indicated higher elasticity.

The chewability was rated as good when the time until the soft candy became unchewable was 35 seconds or longer.

### Evaluation:

A - the sensory evaluation score is 3 or more and 5 or less
B - the sensory evaluation score is 2 or more and less than 3, or more than 5 and 6 or less.
C - the sensory evaluation score is less than 2 or more than 6

### <Water content>

About 1 g of the soft candy base composition was placed in an aluminum container and weighed, and then the weight of the confectionery after being kept at 100°C under vacuum for 16 hours was measured, and the weight loss was calculated as the water content value.

**[Table 3]**

| | Examples | | | | | | | | | | Comparative Example |
|---|---|---|---|---|---|---|---|---|---|---|---|
| | 1 | 2 | 3 | 4 | 5 | 6 | 7 | 8 | 9 | 10 | 1 |
| Sugar ratio [mass%] | 57 | 57 | 57 | 57 | 57 | 57 | 57 | 57 | 57 | 57 | 55 |
| Measured water content [mass%] | 8.5 | 8.3 | 8.0 | 7.7 | 8.3 | 8.3 | 8.0 | 7.7 | 8.0 | 8.1 | 7.5 |
| Specific gravity [g/cm³] | 1.01 | 1.09 | 1.11 | 1.12 | 1.16 | 1.20 | 1.22 | 1.23 | 1.23 | 1.24 | 1.32 |
| Shape retention | A | A | A | A | A | A | A | A | A | A | D |
| Detachability | B | A | B | B | B | A | A | B | B | B | D |
| Initial chewing hardness | A | A | A | A | A | A | A | A | A | A | A |
| Elasticity | A | A | A | A | A | A | A | A | A | A | A |

**[Table 4]**

| | Examples | | | | | | |
|---|---|---|---|---|---|---|---|
| | 11 | 12 | 13 | 14 | 15 | 16 | 17 |
| Sugar ratio [mass%] | 52 | 52 | 57 | 57 | 57 | 57 | 63 |
| Measured water content [mass%] | 7.6 | 8.3 | 8.8 | 6.9 | 7.2 | 8.0 | 8.2 |
| Specific gravity [g/cm³] | 1.16 | 1.14 | 1.11 | 1.24 | 1.24 | 1.23 | 1.21 |
| Shape retention | A | A | A | A | A | A | A |
| Detachability | A | B | B | A | A | B | B |
| Initial chewing hardness | C | A | B | C | A | A | B |
| Elasticity | B | A | A | B | A | A | A |

The soft candies of Examples 1 to 17 had excellent shape retention and detachability and also had favorable initial chewing hardness and elasticity.

The soft candy of Comparative Example 1 had favorable initial chewing hardness and elasticity but had insufficient shape retention and detachability.

### <State of bubbles>

The soft candies of Examples 1, 2, 4, and 10, and Comparative Example 2 were cut at the center of the long side direction of each piece perpendicularly to the long side direction, and samples were prepared. A MICROTOME BLADES C35 TYPE microtome disposable blade for block cryosectioning, available from FEATHER Safety Razor Co., Ltd, was used for cutting.

The cross section was placed on the stage of a measuring device (KEYENCE One Shot 3D Profilometer VR-6200) and photographed.

For each example, two samples (samples #1 and #2) were prepared, and the area of bubbles was calculated from the captured images using image processing software ImageJ.

**[Table 5]**

| | Example 10 | Example 10 | Example 4 | Example 4 | Example 2 | Example 2 | Example 1 | Example 1 | Comparative Example 2 | Comparative Example 2 |
|---|---|---|---|---|---|---|---|---|---|---|
| Sample | #1 | #2 | #1 | #2 | #1 | #2 | #1 | #2 | #1 | #2 |
| Specific gravity [g/cm³] | 1.24 | 1.24 | 1.12 | 1.12 | 1.09 | 1.09 | 1.01 | 1.01 | 1.12 | 1.12 |
| Total area [mm²] of bubbles | 0.48 | 0.60 | 1.19 | 2.87 | 5.41 | 8.96 | 10.87 | 11.81 | 10.77 | 8.63 |
| Total area [mm²] of bubbles having area of 0.05 mm² or greater | 0.31 | 0.33 | 0.28 | 1.30 | 3.26 | 6.15 | 7.09 | 8.28 | 9.03 | 7.41 |
| Ratio [%] of total area of bubbles having area of 0.05 mm² or greater to total area of bubbles | 64.3 | 54.7 | 23.4 | 45.3 | 60.3 | 68.7 | 65.2 | 70.1 | 83.8 | 85.9 |
| Cross-sectional photograph (FIG.) | 1 | 2 | 3 | 4 | 5 | 6 | 7 | 8 | 9 | 10 |

The total area of bubbles having an area of 0.05 mm² or greater in the cross section of the soft candy of examples was 80% or less relative to the total area of the bubbles.

The total area of bubbles having an area of 0.05 mm² or greater among bubbles present in the cross section of the soft candy of examples was 80% or less relative to the total area of the bubbles present in the cross section.

### Industrial Applicability

The soft candy of the present invention has excellent shape retention and detachability and does not require individual packaging, and thus is expected to greatly contribute to realizing a sustainable society.

## Claims

1. A soft candy comprising a base composition comprising a sugar, a glucide that inhibits crystallization of the sugar, and a thickener,
wherein the base composition has a specific gravity of 1.00 to 1.25 g/cm³, and a ratio of the sugar to a total mass of the sugar and the glucide that inhibits crystallization of the sugar in the base composition is from 50 to 75 mass%.

2. The soft candy according to claim 1, wherein the base composition further comprises water in an amount of 6.5 to 9.0 mass% of a total mass of the base composition.

3. The soft candy according to claim 1, wherein the base composition further comprises calcium in an amount of 0.04 to 2.0 mass% of a total mass of the base composition.

4. The soft candy according to claim 1, wherein the sugar comprises fine sugar crystals having an average crystal size of less than 30 µm.

5. The soft candy according to claim 1, wherein the thickener is at least one selected from the group consisting of gelatin, starch, modified starch, pullulan, gum arabic, pectin, guar gum, xanthan gum, tamarind gum, carrageenan, deacylated gellan gum, native gellan gum, psyllium seed gum, and carboxymethyl cellulose.

6. The soft candy according to claim 1, wherein the base composition further comprises a vegetable oil, and the vegetable oil is at least one selected from the group consisting of palm oil, soybean oil, rapeseed oil, sunflower oil, palm kernel oil, coconut oil, cottonseed oil, peanut oil, olive oil, palm butter, corn oil, sesame oil, castor oil, and linseed oil.

7. The soft candy according to claim 6, wherein the base composition further comprises an emulsifier, and the emulsifier is at least one selected from the group consisting of a sucrose fatty acid ester, a sorbitan fatty acid ester, lecithin, and a glycerin fatty acid ester.

8. The soft candy according to claim 1, wherein, among bubbles present in a cross section of a soft candy produced by shaping the base composition, a total area of bubbles having an area of 0.05 mm² or greater is 80% or less relative to a total area of the bubbles present in the cross section.

9. The soft candy according to claim 1, wherein a plurality of the soft candies are enclosed as they are in one packaging container.

10. The soft candy according to claim 1, wherein the soft candy is not individually packaged.

11. A soft candy comprising a base composition comprising a sugar, a glucide that inhibits crystallization of the sugar, and a thickener, wherein the base composition has a specific gravity of 1.00 to 1.25 g/cm³, and among bubbles present in a cross section of a soft candy produced by shaping the base composition, a total area of bubbles having an area of 0.05 mm² or greater is 80% or less relative to a total area of the bubbles present in the cross section.

12. The soft candy according to claim 11, wherein the base composition further comprises water in an amount of 6.5 to 9.0 mass% of a total mass of the base composition.

13. The soft candy according to claim 11, wherein the base composition further comprises calcium in an amount of 0.04 to 2.0 mass% of a total mass of the base composition.

14. The soft candy according to claim 11, wherein the sugar comprises fine sugar crystals having an average crystal size of less than 30 µm.

15. The soft candy according to claim 11, wherein the thickener is at least one selected from the group consisting of gelatin, starch, modified starch, pullulan, gum arabic, pectin, guar gum, xanthan gum, tamarind gum, carrageenan, deacylated gellan gum, native gellan gum, psyllium seed gum, and carboxymethyl cellulose.

16. The soft candy according to claim 11, wherein the base composition further comprises a vegetable oil, and the vegetable oil is at least one selected from the group consisting of palm oil, soybean oil, rapeseed oil, sunflower oil, palm kernel oil, coconut oil, cottonseed oil, peanut oil, olive oil, palm butter, corn oil, sesame oil, castor oil, and linseed oil.

17. The soft candy according to claim 16, wherein the base composition further comprises an emulsifier, and the emulsifier is at least one selected from the group consisting of a sucrose fatty acid ester, a sorbitan fatty acid ester, lecithin, and a glycerin fatty acid ester.

18. The soft candy according to claim 11, wherein a ratio of the sugar to a total mass of the sugar and the glucide that inhibits crystallization of the sugar in the base composition is from 50 to 75 mass%.

19. The soft candy according to claim 11, wherein a plurality of the soft candies are enclosed as they are in one packaging container.

20. The soft candy according to claim 11, wherein the soft candy is not individually packaged.

21. A method for producing a soft candy, the method comprising the steps of :
a soft candy base stock solution preparing step of preparing a soft candy base stock solution by mixing a sugar, a glucide that inhibits crystallization of the sugar, and water;
a soft candy base preparing step of boiling down the soft candy base stock solution to form a soft candy base;
a base composition preparing step of obtaining a base composition by adding a foaming agent and an acidulant to the soft candy base, and reacting the foaming agent and the acidulant to generate bubbles; and
a shaping step of forming a soft candy by shaping the base composition.

22. The method for producing a soft candy according to claim 21, wherein the foaming agent is at least one selected from the group consisting of a carbonate of calcium and a hydrogencarbonate of calcium.

23. The method for producing a soft candy according to claim 21, the method further comprising, after the shaping step, enclosing a plurality of the shaped soft candies in one packaging container, the shaped soft candies not being individually covered or wrapped.

24. The method for producing a soft candy according to claim 21, wherein a thickener is further mixed in the mixing step and/or the adding step, and the thickener is at least one selected from the group consisting of gelatin, starch, modified starch, pullulan, gum arabic, pectin, guar gum, xanthan gum, tamarind gum, carrageenan, deacylated gellan gum, native gellan gum, psyllium seed gum, and carboxymethyl cellulose.

25. The method for producing a soft candy according to claim 21, wherein a vegetable oil is further mixed in the mixing step, and the vegetable oil is at least one selected from the group consisting of palm oil, soybean oil, rapeseed oil, sunflower oil, palm kernel oil, coconut oil, cottonseed oil, peanut oil, olive oil, palm butter, corn oil, sesame oil, castor oil, and linseed oil.

26. The method for producing a soft candy according to claim 25, wherein an emulsifier is further mixed in the mixing step, and the emulsifier is at least one selected from the group consisting of a sucrose fatty acid ester, a sorbitan fatty acid ester, lecithin, and a glycerin fatty acid ester.
